# EUROPEAN PATENT APPLICATION

(11) **EP 2 066 013 A2**
(43) Date of publication of application: **03.06.2009**
(21) Application number: 08020719.4
(22) Date of filing: 28.11.2008
(51) Int. Cl.: H02M 7/219

(54) **Electric power converter and control method for the same**

(30) Priority: 30.11.2007 JP 2007310124
(71) Applicant: Hitachi, Ltd., Tokyo 100-8280 (JP)
(72) Inventor: Shoji, Hiroyuki, Tokyo 100-8220 (JP); Uruno, Junpei, Tokyo 100-8220 (JP); Isogai, Masayuki, Ibaraki 316-8502 (JP)
(74) Representative: Beetz & Partner

(57) **Abstract**

An electric power converter is provided with a chopper circuit for converting DC voltage of a DC power source to smoothed DC voltage and applying the voltage to an inverter, the inverter has first and second upper and lower arms each comprising at least two switching elements connected in series, a first resonant load circuit is provided between output terminals of an SEPP inverter comprising at least the first upper and lower arms, a second resonant load circuit including the first load circuit is provided between output terminals of a full-bridge inverter comprising the first and second upper and lower arms, a switching means is provided which cuts off the second resonant load circuit from the output terminal of the second upper and lower arms, and one of the switching elements of the second upper and lower arms also operates as a boost or a buck boost switching element of the chopper circuit.

## Description

### FIELD OF THE INVENTION

The present invention relates to electric power converters for converting DC power supply voltage to given AC voltage or DC voltage. The power converter may be used, for example, for an inverter-controlled lighting device or an inverter-controlled electromagnetic induction heating device which can inductively heat different objects made of different materials by supplying desired electric power to the target object.

### BACKGROUND OF THE INVENTION

The inverter-controlled electromagnetic induction heating device requires no fire for heating the object such as a cooking pan, and has become more widely used in recent years. The electromagnetic induction heating device heats a metallic object by passing high-frequency current to an induction coil to which the object is placed adjacent, and generating an eddy current so that the object can generate heat by its own electrical resistance. In general, a magnetic object with high specific resistance, e.g., iron, is easier to be heated while a non-magnetic object with low resistance, e.g., copper or aluminum, is harder to be heated.

As a conventional method to address such an issue, an electromagnetic induction cooker is disclosed in Patent Document 1. In this publicly known embodiment, the device comprises a single induction coil and a high-frequency inverter having a full-bridge circuit which also functions as a half-bridge inverter. The cooker can inductively heat different objects made of different materials by determining whether the object, e.g., a cooking pan, is magnetic or not, and switching the system accordingly between the full-bridge inverter and the half-bridge inverter.

A popular system for the conventional inverters which input a commercial AC power source has a power-factor correction converter and a DC-AC converter connected in the subsequent stage. However, a preference for reduced size and weight, a simplified circuit, and low cost, have made the converter to be modified, in which converter the power-factor correction function is integrated into the DC-AC converter in the subsequent stage. One of the conventional examples for such a converter is the inverter device disclosed in Patent Document 2. In this publicly known embodiment, the device comprises a buck chopper circuit which rectifies an AC power source to output smoothed DC voltage to an electrolytic capacitor through a switching element and an inductor, and an inverter circuit which converts the smoothed DC voltage into high-frequency voltage for supplying to a load. The inverter circuit has a switching element which also operates as a switching element of a boost or a buck boost chopper. The on and off timings of the switching elements of the buck chopper circuit and the inverter circuit are controlled to allow the system to operate as any one of a buck, a buck boost, or a boost chopper circuit. The buck chopper circuit is operated to suppress the occurrence of inrush current at a time of power-on, and then the inverter circuit is operated to supply the high-frequency voltage to the power-factor correction portion and the load.
Patent Document 1: Japanese Patent Laid-open No. Hei 5(1993)-251172
Patent Document 2: Japanese Patent No. 3261829

### SUMMARY OF THE INVENTION

In the conventional technique disclosed in Patent Document 1, although the high-frequency inverter can be switched between a full-bridge mode and a half-bridge mode, its resonant capacitor is fixed regardless of the mode, which configuration limits a setting range of driving frequency.

Furthermore, the conventional technique disclosed in Patent Document 2 does not allow the device to heat an object at the optimum resonant load condition, inverter voltage, nor driving frequency for the object when the load is changed substantially like above, e.g., from a magnetic to a non-magnetic pan.

As described above, in Patent Documents 1 and 2, when the load changes substantially, e.g., from a magnetic to a non-magnetic pan, it is difficult to heat the object at the optimum frequency and voltage for the object each time, and to obtain equal heating performances.

In addition, the embodiment in Patent Document 2 has a disadvantage that the buck chopper does not allow the inverter to work when the chopper is in operation even though the boost or the buck boost chopper in operation allows the inverter to work.

An object of the present invention is to provide an electric power converter which allows the inverter voltage and driving frequency to be set to the optimum levels so that desired power can be efficiently supplied even under a large load variation.

In a preferred embodiment of the present invention, a control method for an electric power converter comprising an inverter having first and second upper and lower arms, in each of which two main switching elements are connected in series; the inverter converts DC voltage to AC voltage and supplies the AC voltage to a load, a first inverter controller for controlling the inverter to operate as a half-bridge inverter by driving the switching elements of the first upper and lower arms, and a second inverter controller for controlling the inverter to operate as a full-bridge inverter by driving the switching elements of the first and second upper and lower arms; is characterized by that a chopper circuit converts DC supply voltage to DC voltage which is applied to the inverter as the DC voltage; a first load circuit is connected between output terminals of the half-bridge inverter comprising the first upper and lower arms; a second load circuit including at least a part of the first load circuit is connected between output terminals of the full-bridge inverter comprising the first and second upper and lower arms; the second load circuit is contacted/separated to/from the inverter by a switching means; and at the same time, one switching element of the second upper and lower arms is also used as a boost or a buck boost switching element of the chopper circuit.

Here, the half-bridge inverter means basically an inverter which turns on and off the switching elements of the first upper and lower arms to supply alternating current to the load. Therefore the half-bridge inverter includes, even when a full-bridge circuit is in use, an SEPP inverter which turns on and off the switching elements of the first upper and lower arms while only one of the switching elements of the second upper and lower arms is turned on.

In another preferred embodiment of the present invention, the first load circuit is connected between each of serial connection points of the first and second upper and lower arms.

In the preferred embodiment of the present invention, resonant load circuits each having an inductor and a resonant capacitor are connected as the first and second load circuits.

In the preferred embodiment of the present invention, a capacitor having a smaller capacitance than the resonant capacitor of the second load circuit is connected as the resonant capacitor of the first load circuit.

In the preferred embodiment of the present invention, the DC voltage obtained from a DC power source through the chopper circuit is smoothed by a smoothing capacitor, the first upper and lower arms are connected to the DC power source, and the second upper and lower arms are connected to the smoothing capacitor.

According to the preferred embodiment of the present invention, the converter allows the inverter voltage and driving frequency to be set to the optimum levels with a minimum number of parts, so that desired power can be efficiently supplied to the load even under a large load variation.

Other objects and features of the present invention will be apparent in the following embodiments.

### BRIEF DESCRIPTION OF THE DRAWINGS

Fig. 1 is a circuit configuration diagram of the electric power converter according to a first embodiment of the present invention.
Fig. 2 is a circuit configuration diagram of the electric power converter according to a second embodiment of the present invention.
Fig. 3 illustrates operations of the electric power converter according to the embodiment in Fig. 2.
Fig. 4 illustrates operations of the electric power converter according to the embodiment in Fig. 2.
Fig. 5 shows operation waveforms of the electric power converter according to the embodiment in Fig. 2.
Fig. 6 shows operation waveforms of the electric power converter according to the embodiment in Fig. 2.
Fig. 7 shows operation waveforms of the electric power converter according to the embodiment in Fig. 2.
Fig. 8 shows operation waveforms of the electric power converter according to the embodiment in Fig. 2.
Fig. 9 shows operation waveforms of the electric power converter according to the embodiment in Fig. 2.
Fig. 10 is a circuit configuration diagram of the electric power converter according to a third embodiment of the present invention.
Fig. 11 is a circuit configuration diagram of the electric power converter according to a fourth embodiment of the present invention.
Fig. 12 shows operation waveforms of the electric power converter according to the embodiment in Fig. 11.
Fig. 13 shows operation waveforms of the electric power converter according to the embodiment in Fig. 11.
Fig. 14 is a circuit configuration diagram of the electric power converter according to a fifth embodiment of the present invention.
Fig. 15 is a circuit configuration diagram of the electric power converter according to a sixth embodiment of the present invention.

### DESCRIPTION OF THE PREFERRED EMBODIMENTS

With reference to the accompanying figures, preferred embodiments of the present invention are described below.

### (Embodiment 1)

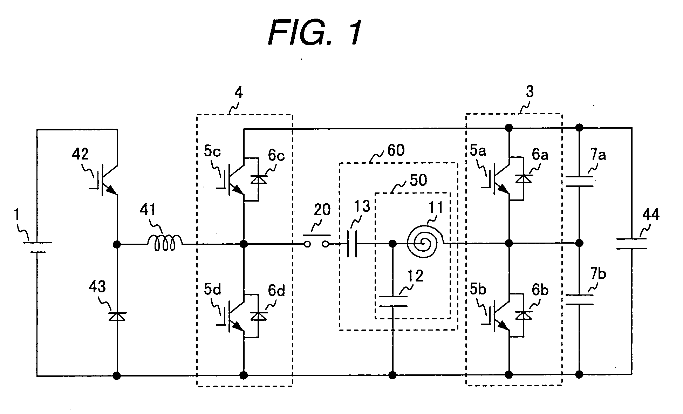

Fig. 1 is a circuit configuration diagram of the electric power converter according to the first embodiment of the present invention. This embodiment is configured to convert DC power to AC power; the figure shows a circuit configuration to heat a metallic object by passing high-frequency alternating current to an induction coil and generating electromagnetic induction. The target object to be heated is not shown in the figure, but is magnetically coupled with an induction coil 11 which supplies electric power to the object. In Fig. 1, a power semiconductor switching element 42, an inductor 41, and a switching element 5d are connected in series between the positive and the negative electrodes of a DC power source 1. A smoothing capacitor 44 is connected to both ends of the inductor 41 through a diode 43 and a diode 6c. To both ends of the smoothing capacitor 44, first upper and lower arms 3 and second upper and lower arms 4 are connected in parallel; the first upper and lower arms 3 in which switching elements 5a and 5b are connected in series, and the second upper and lower arms 4 in which a switching elements 5c and 5d are connected in series. Diodes 6a to 6d are connected in parallel in opposite directions to the switching elements 5a to 5d respectively. Snubber capacitors 7a and 7b are connected in parallel to the switching elements 5a and 5b respectively. The snubber capacitors 7a and 7b are charged or discharged by the breaking current at turning-off of the switching element 5a or 5b, and suppress turn-off loss by reducing a change in the voltage applied to both of the switching elements. One end of the induction coil 11 is connected to an output terminal of the first upper and lower arms 3, and between the other end of the induction coil 11 and the negative electrode of the DC power source 1, a first resonant capacitor 12 is connected forming a first resonant load circuit 50. In addition, a second resonant capacitor 13 and a relay contact 20 are connected in series between the other end of the induction coil and an output terminal of the second upper and lower arms. The induction coil 11, the first resonant capacitor 12, and the second resonant capacitor 13 make up a second resonant load circuit 60. Depending on the material of the target object or a heating power setting of the device, the relay contact 20 can switch operations between the first resonant load circuit 50 and the second resonant load circuit 60.

Now, since the induction coil 11 and the target object (not shown) are magnetically coupled, if the target object is represented as an equivalent circuit from the view of the induction coil 11, it has a configuration of equivalent resistance and equivalent inductance of the target object connected in series. The equivalent resistance and equivalent inductance can vary depending on the material of the target object. If the material is non-magnetic and low-resistance, e.g., copper or aluminum, both of the equivalent resistance and equivalent inductance will be low, but if the material is magnetic and high-resistance, e.g., iron, both of them will be high.

In Fig. 1, when the target object is made of copper or aluminum, the relay contact 20 is turned off and the object is heated using a SEPP (Single Ended Push-Pull) inverter which comprises the first upper and lower arms 3, the induction coil 11 and the first resonant capacitor 12. As described above, this is a type of half-bridge inverters.

Since a non-magnetic low-resistance object has low equivalent resistance, a large current is necessary to obtain a desired output. Since skin resistance of an object is proportional to a square root of frequency, raising the frequency is effective for heating the low-resistance object such as copper or aluminum. Thus, the capacitance of the first resonant capacitor 12 may be set to the level which allows the first upper and lower arms 3 to be driven at a frequency of approximately 90 kHz, for example. Since the relay contact 20 is turned off, the second upper and lower arms 4 are cut off from the resonant load circuit 60, thus the system is in a half-bridge circuit mode.

Therefore, the switching element 5d can be operated as the switching element of a boost chopper or a buck boost chopper using the inductor 41 as the chopper inductor, and the diode 6c can be operated as the rectifying element. On the other hand, the switching element 42 can be operated as the switching element of a buck chopper using the inductor 41 as the chopper inductor, and the diode 43 can be operated as the rectifying element.

When the target object is made of iron, the relay contact 20 is turned on, and the object is heated using a full-bridge inverter which comprises the first and second upper and lower arms, the induction coil 11, and the first and second resonant capacitors 12 and 13. As mentioned above, since a magnetic high-resistance object has high equivalent resistance, it is difficult to pass current through the resonant load circuit. Thus, by changing the inverter to a full-bridge mode, output voltage of the inverter can be raised twice, and a desired output can be obtained. In the previously mentioned case of copper or aluminum, since they have low resistance, the frequency of the inverter was set to approximately 90 kHz to raise the skin resistance. However, in the case of iron with originally high resistance, the frequency may be set to approximately 20 kHz to drive the first and second upper and lower arms. As described above, the capacitance of the first resonant capacitor 12 can be set according to the driving frequency of approximately 90 kHz, while the capacitance of the second resonant capacitor 13 can be set according to the driving frequency of approximately 20 kHz. Since those driving frequencies are significantly different, the capacitance of the second resonant capacitor 13 will have a sufficiently larger value than the first resonant capacitor 12. Therefore, resonance frequency of the full-bridge inverter will be set mainly by the second resonant capacitor 13. In this full-bridge inverter mode, there will be no problem to leave the resonant capacitor 12 connected since the current passed to the resonant capacitor 13 is sufficiently large.

While the previously mentioned conventional technique has a challenge that the resonant capacitor is fixed regardless of the circuit mode, which configuration limits a setting range of the driving frequency, the present embodiment allows the capacitance of the resonant capacitor to switch by switching the relay contact 20. Thus, the setting range of the driving frequency of the inverter is increased, allowing the converter to heat the target object at the optimum frequency depending on the material of the object. The second upper and lower arms 4 are connected to the resonant load circuit 60 because the relay contact 20 is turned on, and the switching element 5d is used as an inverter switching element. At the same time, the switching element 5d is also used as the switching element of a boost or a buck boost chopper using the inductor 41 as the chopper inductor. Operations of each switching element will be discussed later.

The load in this embodiment is an object to be heated, but it is possible, for example, to supply power to a light source by connecting a fluorescent lamp in parallel to the resonant capacitor. In addition, it is also possible to supply power to a DC load such as an electronic device, by replacing the induction coil with a transformer and providing a rectifying circuit to the secondary side of the transformer.

### (Embodiment 2)

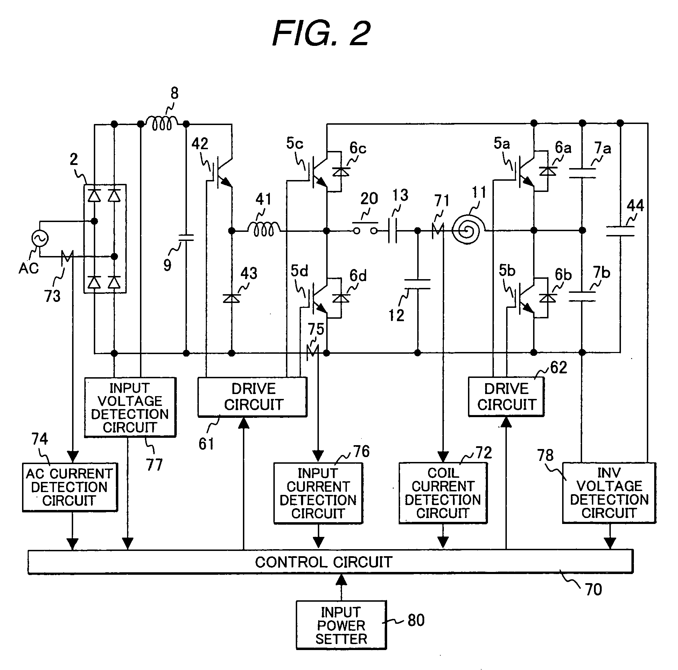

Fig. 2 is a circuit configuration diagram of the electric power converter according to the second embodiment of the present invention. The same components as those in Fig. 1 are marked with the same reference numerals, and those descriptions are omitted. In Fig. 2, an alternating current power source AC is connected to AC input terminals of a diode bridge 2, and a filter made up of an inductor 8 and a capacitor 9 is connected to DC output terminals of the diode bridge 2. The DC voltage including pulsation caused by commercial frequency is outputted to both ends of the capacitor 9 which functions as the DC power source 1 in the first embodiment. The subsequent stage beyond the capacitor 9 has the same configuration according to the first embodiment.

Next, the current/voltage detection points which are needed for controlling each switching element in the present embodiment are explained.

In order to detect the power inputted from the alternating current power source AC or to detect the material of the target object, alternating current from the alternating current power source AC must be detected. In this embodiment, after the alternating current from the alternating current power source AC is converted to voltage by a current sensor 73, the current is detected by an AC detection circuit 74.

In addition, in order to correct power factor by generating an AC waveform according to the voltage of the alternating current power source AC, a signal is needed as a basis for the current waveform. Generally, the output voltage of the diode bridge, i.e., rectified DC voltage, is detected. In this embodiment, the voltage between the DC output terminals of the diode bridge 2 is detected with an input voltage detection circuit 77. In order to reduce a number of parts, it is possible to generate the AC waveform without detecting the input voltage by calculating a reference waveform within a control circuit. In this case, the input voltage detection circuit 77 can be deleted. The AC waveform can be generated by controlling the current waveform passing a chopper inductor 41. In this embodiment, after the current passing the inductor 41 is converted to voltage by a current sensor 75, the current is detected by an input current detection circuit 76. It is possible to generate the AC waveform by detecting the current of the switching element 42 instead of detecting the current of the inductor 41. In this case, the current sensor 75 merely needs to be repositioned.

To control input power or to detect the material or state of the target object, the current passing the induction coil needs to be detected. In this embodiment, after the current passing the induction coil 11 is converted to voltage by a current sensor 71, the current is detected by a coil current detection circuit 72.

In addition, to control output power of the load, the output voltage of the chopper circuit, i.e., supply voltage of the inverter, must be detected to perform feedback control. In this embodiment, the voltage at both ends of the smoothing capacitor 44 is detected by an INV voltage detection circuit 78. A control circuit 70 generates drive signals for each switching element based on the detected values from each of the previously mentioned detection circuits and a power command value from an input power setter 80.

The easiest way to control power with the inverter circuit is to use PFM (pulse frequency modulation) control which changes frequency by taking an advantage that impedance of the resonant load circuit can be changed to frequency. In this embodiment, the power can be controlled by PFM-controlling the first upper and lower arms 3. However, when the amount of power change compared to the frequency is large, that is, when Q representing sharpness of resonance is high for the load, PAM (pulse amplitude modulation) control is desirable which changes the amplitude of supply voltage of the inverter. This embodiment allows the supply voltage of the inverter to be controlled by controlling the on-time duty of the second upper and lower arms 4, and the power to be controlled by PAM control. The switching elements 5a and 5b are driven by a drive circuit 62 based on the control signals given by the control circuit 70. In the same manner, switching elements 42, 5c, and 5d are driven by a drive circuit 61 based on the control signals from the control circuit 70.

Next, the control methods used in this embodiment are explained. The switching elements 5d and 42 are operated as a buck, a boost, or a buck boost chopper, performing power-factor correction control and output voltage control; the power-factor correction control which generates an input current waveform according to the voltage of the alternating current power source AC.

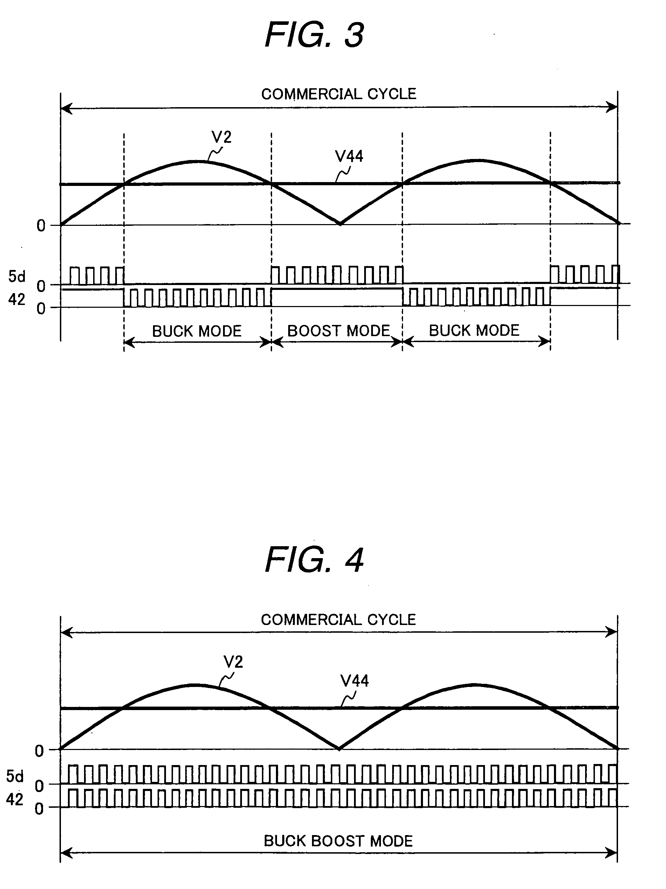

Figs. 3 and 4 show the control methods of the switching elements 5d and 42. In Figs. 3 and 4, DC output voltage of the diode bridge 2 is shown as V2 and voltage of the smoothing capacitor 44 as V44. First, in Fig. 3, when V2 is higher than V44, the switching element 5d is turned off and the switching element 42 is turned on and off to allow a buck-mode chopper operation. On contrary, when V2 is lower than V44, the switching element 42 is turned on and the switching element 5d is turned on and off to allow a boost-mode chopper operation. In this way, a number of switchings for each switching element can be reduced as well as switching loss by switching the chopper operations according to the change in the DC output voltage of the diode bridge 2, i.e., the voltage change within a commercial cycle. In Fig. 4, the switching elements 5d and 42 are turned on and off simultaneously regardless of the voltage change within the commercial cycle to allow a chopper operation in a buck boost mode.

Next, the operations in this embodiment when the target object is made of copper or aluminum are described. As described in the first embodiment, when the target object is made of copper or aluminum, the relay contact 20 is turned off, and the object is heated by the SEPP (Single Ended Push-Pull) half-bridge inverter comprising the first upper and lower arms 3, the induction coil 11 and the first resonant capacitor 12. The second upper and lower arms are cut off from the resonance load circuit 60 since the relay contact 20 is turned off. Thus, the switching element 5d can be operated as the switching element of the boost or the buck boost chopper using the inductor 41 as the chopper inductor, and the diode 6c can be operated as the rectifying element. On the other hand, the switching element 42 can be operated as the switching element for the buck chopper using the inductor 41 as the chopper inductor, and the diode 43 can be operated as the rectifying element.

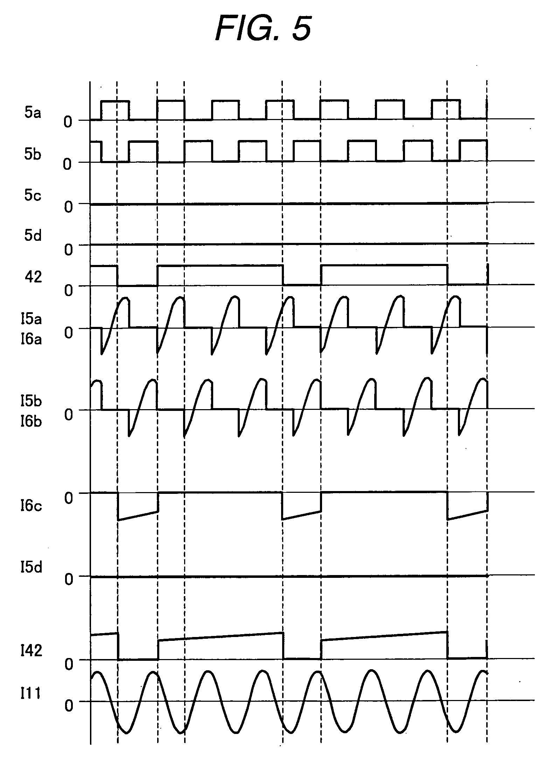

Fig. 5 shows a drive signal and a current waveform of each switching element and a current waveform of the induction coil 11 in the buck mode when the switching method is applied; the switching method in which the buck mode and the boost mode are switched within the commercial cycle. In Fig. 5, the switching elements 5a and 5b are complementarily driven, the switching elements 5c and 5d are turned off, and the switching element 42, as controlling its on-time, performs the buck-mode chopper operation to correct power factor. The switching elements 5a and 5b actually have dead times to prevent the upper and lower arms from short-circuiting, but transient operations at switchings are omitted here and dead times are not shown in the figure for easier understanding. The switching elements 5a and 5b are driven at a higher frequency than the resonance frequency determined by the resonant capacitor 12 and the equivalent inductance of the induction coil 11 including the target object. For this reason, switching loss will not occur since the switching element 5a turns on when the diode 6a is in a conductive state. In the same manner, there will be no switching loss when the switching element 5b is turned on. On the other hand, the switching element 42 can perform the chopper operation independently at any frequency regardless of the driving frequency of the inverter.

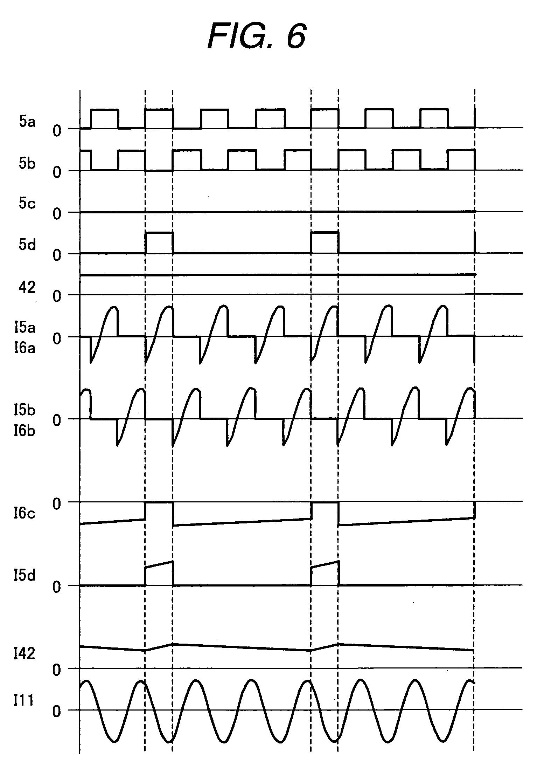

Fig. 6 shows a drive signal and a current waveform of each switching element and a current waveform of the induction coil 11 in the boost mode. In Fig. 6, the switching elements 5a and 5b are complementarily driven, the switching element 5c is turned off, the switching element 42 is turned on, and the switching element 5d, as controlling its on-time, performs the boost-mode chopper operation to correct power factor.

Next, the operations in this embodiment when the target object is made of iron are described. As described in the first embodiment, when the target object is made of iron, the relay contact 20 is turned on, and the object is heated by the full-bridge inverter comprising the first and second upper and lower arms, the induction coil 11, and the first and second resonant capacitors 12 and 13. The second upper and lower arms 4 are connected to the resonant load circuit 60 since the relay contact 20 is turned on, and the switching elements are used as an inverter as well as the boost or the buck boost chopper using the inductor 41 as the chopper inductor.

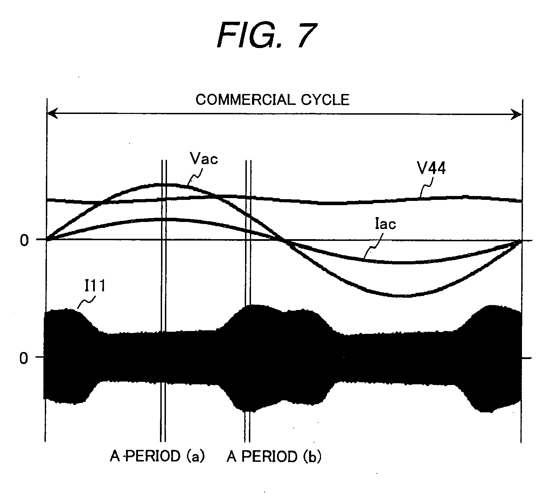

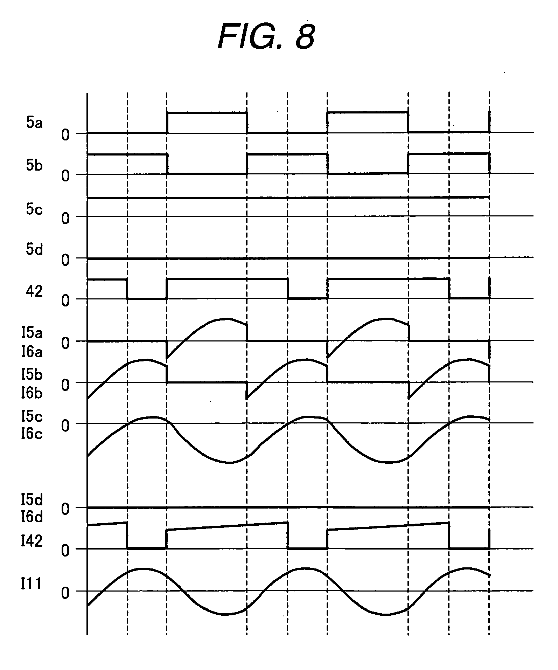

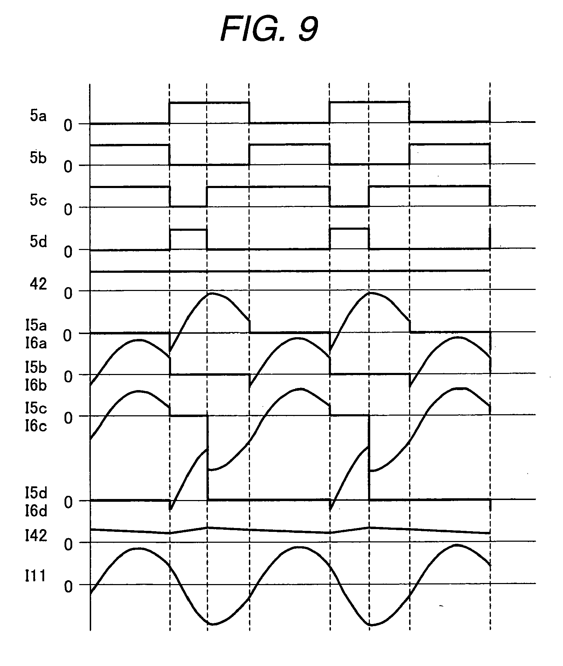

Fig. 7 shows a voltage Vac and a current Iac of the alternating current power source AC, a voltage V44 of the smoothing capacitor 44, and a current I11 of the induction coil 11 when the switching system is applied; the switching system in which the buck mode and the boost mode are switched within the commercial cycle. The induction coil current I11 pulsates according to the voltage change of the AC voltage Vac, and is generated by switching the buck and boost modes within the commercial cycle. Operations in a period (a) and a period (b) are explained referring to Fig. 8 and Fig. 9 respectively.

Fig. 8 is an enlarged view of operation waveforms in the period (a) in Fig. 7, showing a drive signal and a current waveform of each switching element and a current waveform of the induction coil 11. In Fig. 8, the switching elements 5a and 5b are complementarily driven, the switching element 5c is turned on, the switching element 5d is off, and the switching element 42, as controlling its on-time, performs the buck-mode chopper operation to correct power factor. The inverter circuit is the full-bridge circuit comprising the first and second upper and lower arms; however the second upper and lower arms perform no on and off operation, but one of the switching elements, 5c remains turned on while the other switching element 5d remains turned off. For this reason, the target object is heated by the half-bridge inverter comprising the first upper and lower arms 3, the induction coil 11, and the first and second resonant capacitors 12 and 13. Since a half of the voltage of the smoothing capacitor 44 is applied to the resonant load circuit 60, the current I11 of the induction coil 11 becomes small. The switching elements 5a and 5b are driven at a higher frequency than the resonance frequency determined by the resonant capacitors 12 and 13 and the equivalent inductance of the induction coil 11 including the target object. For this reason, switching loss will not occur since the switching element 5a turns on while the diode 6a is in a conductive state. In the same manner, there will be no switching loss when the switching element 5b is turned on. On the other hand, the switching element 42 in the buck-mode can perform the chopper operation independently at any driving frequency regardless of the driving frequency of the inverter. However, since the buck mode and the boost mode are switched within the commercial cycle, it is desirable that the switching element 42 and the inverter be driven in synchronism, considering the following chopper operation and the inverter operation in the boost mode.

Fig. 9 is an enlarged view of operation waveforms in the period (b) in Fig. 7, showing a drive signal and a current waveform of each switching element and a current waveform of the induction coil 11. In Fig. 9, the switching elements 5a and 5b are complementarily driven, and the switching element 5d, as controlling its on-time, performs the boost-mode chopper operation to correct power factor. The switching element 5c is complementarily driven with the switching element 5d, and the switching element 42 is turned on. The switching elements 5c and 5d actually have dead times to prevent the upper and lower arms from short-circuiting, but transient operations at switchings are omitted here and dead times are not shown in the figure for easier understanding. The inverter circuit is the full-bridge inverter comprising the first and second upper and lower arms. However, the voltage of the smoothing capacitor 44 is fully applied to the resonant load circuit 60 only at the period when both of the switching elements 5a and 5d are simultaneously turned on and the switching elements 5b and 5c are simultaneously turned on. Since the switching element 5d is used as an inverter switching element as well as the switching element of the boost chopper, the current of the inductor 41 and the current of the induction coil 11 are superimposed. When the current of the induction coil 11 is larger than the current of the inductor 41 due to the synchronized operation of the switching elements 5a and 5d, no switching loss will occur because the switching element 5d can be turned on while the diode 6d is in a conductive state. Generally, when a chopper switching element operates in a continuous current mode, reverse recovery of the rectifying diode will occur at a turn-on, passing recovery current and generating switching loss. However, this embodiment can eliminate the switching loss at the turn-on by meeting the above current conditions; thus it improves the efficiency of the system. In Fig. 9, since the diode 6c is used as a current-circulating element of the inverter as well as the rectifying element of the chopper, the current of the inductor 41 and the current of the induction coil 11 are superimposed.

### (Embodiment 3)

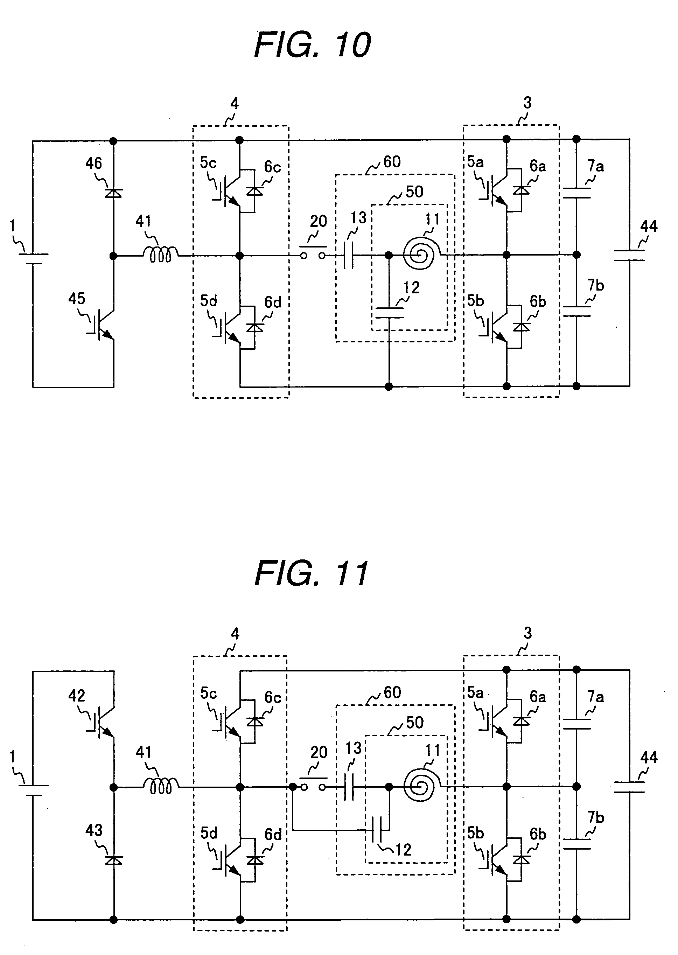

Fig. 10 is a circuit configuration diagram of the electric power converter according to the third embodiment of the present invention. The same components as those in Fig. 1 are marked with the same reference numerals, and those descriptions are omitted. In Fig. 10, a power semiconductor switching element 45, the inductor 41, and the switching element 5c are connected in series between the positive and the negative electrodes of the DC power source 1. At both ends of the inductor 41, the smoothing capacitor 44 is connected through a diode 46 and the diode 6d. This embodiment is different from the first embodiment in that the switching element 5c is used as a switching element of the inverter and the boost chopper or the buck boost chopper. Along with this, the diode 6d is also used as a current-circulating element of the inverter and the rectifying element of the chopper.

### (Embodiment 4)

Fig. 11 is a circuit configuration diagram of the electric power converter according to the fourth embodiment of the present invention. The same components as those in Fig. 1 are marked with the same reference numerals, and those descriptions are omitted. In Fig. 11, this embodiment is different from the first embodiment in that the resonant load circuit 50 comprising the induction coil 11 and the first resonant capacitor 12 is connected between the output terminals of the first and second upper and lower arms 3 and 4. The relay contact 20 is switched depending on the material of the target object as described above, however the full-bridge inverter is used to heat the object regardless of the material of the object. When the target object is made of copper or aluminum, the first upper and lower arms 3 are driven at a frequency of approximately 90 kHz for example, as previously described. In this case, considering a reduction in switching loss, the second upper and lower arms 4 do not necessarily have to be driven at the same frequency as the first upper and lower arms 3, even when the inverter is driven as the full-bridge inverter. Thus, the second upper and lower arms 4 can be driven at a lower frequency than the first upper and lower arms 3 and still perform the inverter operation and the boost or the buck boost operation.

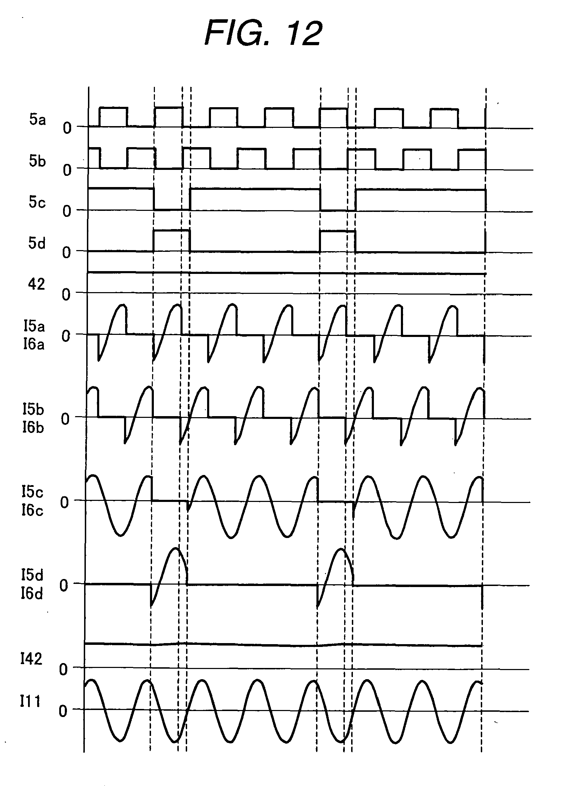

Fig. 12 shows a driving signal and a current waveform of each switching element and a current waveform of the induction coil 11 in the boost mode when the driving frequency of the switching elements 5c and 5d of the second upper and lower arms 4 is reduced to 1/3 of the driving frequency of the switching elements 5a and 5b of the first upper and lower arms 3. In Fig. 12, the switching elements 5a and 5b are complementarily driven, and the switching element 5d, as controlling its on-time, performs the boost-mode chopper operation to correct power factor. The switching element 5c is complementarily driven with the switching element 5d, and the switching element 42 is turned on. The inverter is the full-bridge inverter comprising the first and second upper and lower arms, but the voltage of the smoothing capacitor 44 is fully applied to the resonant load circuit 50 or 60 only during the period when the switching elements 5a and 5d are simultaneously turned on and the switching elements 5b and 5c are simultaneously turned on. Since the switching element 5d is used as an inverter switching element as well as the switching element of the boost chopper, the current of the inductor 41 and the current of the induction coil 11 are superimposed. When the current of the induction coil 11 is larger than the current of the inductor 41 due to the synchronized operation of the switching elements 5a and 5d, no switching loss will occur since the switching element 5d can be turned on when the diode 6d is in a conductive state.

In Fig. 12, since the first upper and lower arms 3 are driven at a higher frequency compared to the resonance frequency of the resonant load circuit 50 or 60, current polarity of the induction coil 11 is reversed once during an on-time of the switching elements. On the other hand, since the driving frequency of the second upper and lower arms 4 is reduced to 1/3 of the driving frequency of the first upper and lower arms 3, the current polarity of the induction coil 11 is reversed up to 6 times when the on-time of the switching element of the second upper and lower arms 4 is extended to nearly the driving cycle.

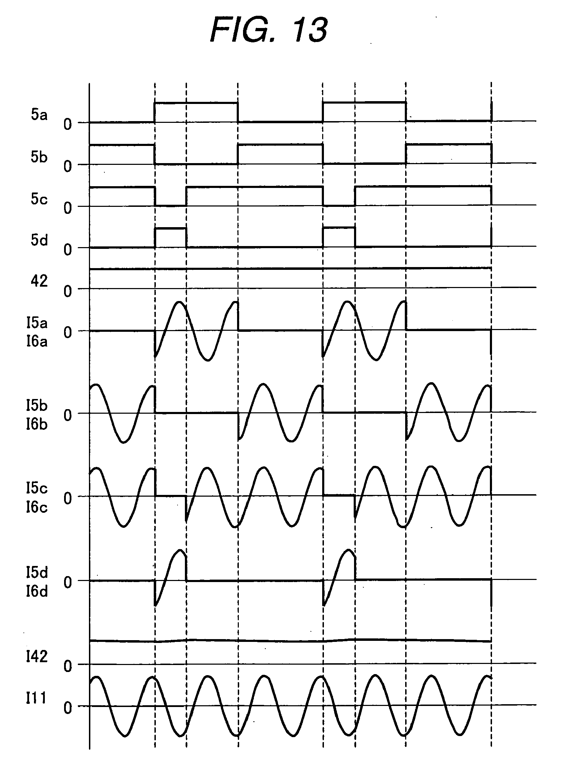

Fig. 13 shows a drive signal and a current waveform of each switching element and a current waveform of the induction coil 11 in the boost mode when the driving frequency of the first and second upper and lower arms 3 and 4 are both reduced to 1/3 of the resonance frequency of the resonant load circuit 50 or 60. In Fig. 13, the switching elements 5a and 5b are complementarily driven, and the switching element 5d, as controlling its on-time, performs the boost-mode chopper operation to correct power factor. The switching element 5c is complementarily driven with the switching element 5d, and the switching element 42 is turned on. The inverter has the full-bridge inverter circuit comprising the first and second upper and lower arms, but the voltage of the smoothing capacitor 44 is fully applied to the resonant load circuit 50 or 60 only during the period when the switching elements 5a and 5d are simultaneously turned on and the switching elements 5b and 5c are simultaneously turned on. Since the switching element 5d is used as an inverter switching element as well as the switching element of the boost chopper, the current of the inductor 41 and the current of the induction coil 11 are superimposed. When the current of the induction coil 11 is larger than the current of the inductor 41 due to the synchronized operation of the switching elements 5a and 5d, no switching loss will occur since the switching element 5d can be turned on when the diode 6d is in a conductive state. In Fig. 13, since the driving frequency of the first upper and lower arms 3 is reduced to 1/3 of the resonance frequency, current polarity of the induction coil 11 is reversed 3 times during an on-time of the switching elements of the first upper and lower arms 3. On the other hand, since the driving frequency of the second upper and lower arms 4 is also reduced to 1/3 of the resonance frequency in the same manner as the first upper and lower arms 3, the current polarity of the induction coil 11 is reversed up to 6 times when the on-time of the switching element of the second upper and lower arms 4 is extended to nearly the driving cycle.

As described above, the switching loss can be reduced by driving both of the first and second upper and lower arms at a frequency lower than the resonance frequency, i.e., at a frequency of approximately one over an integer.

### (Embodiment 5)

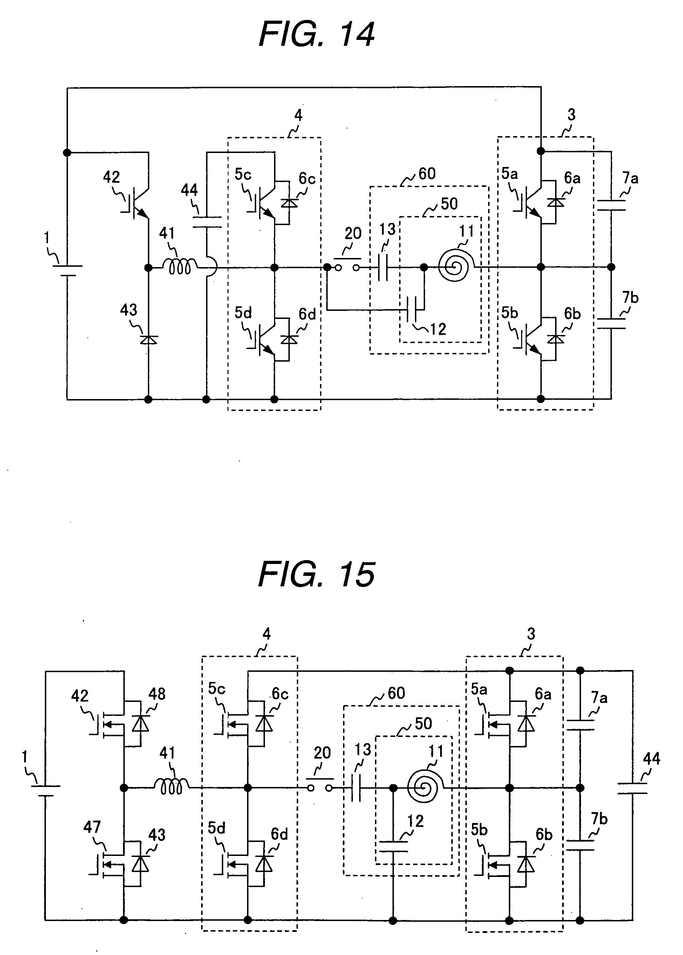

Fig. 14 is a circuit configuration diagram of the electric power converter according to the fifth embodiment of the present invention. The same components as those in Fig. 11 are marked with the same reference numerals, and those descriptions are omitted. In Fig. 14, this embodiment is different from the fourth embodiment in that the first upper and lower arms 3 are connected between the positive and the negative electrodes of the DC power source 1. This will reduce the load of the switching element 42 since a part of the power supplied to the resonant load circuit 50 or 60 can be supplied without passing through the switching element 42.

### (Embodiment 6)

Fig. 15 is a circuit configuration diagram of the electric power converter according to the sixth embodiment of the present invention. The same components as those in Fig. 1 are marked with the same reference numerals, and those descriptions are omitted. In Fig. 15, this embodiment is different from the first embodiment in that each switching element is a MOSFET, and the diode 43 has a MOSFET connected in inverse-parallel as a switching element. Replacing the switching elements with the MOSFETs allows quick turn-off and reduces switching loss. In addition, conduction loss can be reduced by complementarily driving the switching element 47 instead of the diode 43 with the switching element 42 for synchronous rectification and using the MOSFET having low on-resistance even under high compression. In the same manner, the conduction loss can be reduced by synchronously rectifying the switching elements 5a to 5d.

### (Industrial Applicability)

The present invention can be used as a power source for a wide variety of heat sources such as induction cookers for general household or commercial use, hot-water generators, low-temperature or high-temperature steam generation devices, metal melters, thermaltransfer roller drums for adhering copier toner, and so on. The present invention can also be applied to an inverter device for lighting a fluorescent light, or a switching power source for home electronics, consumer devices, and any device which inputs a commercial AC power source.

## Claims

1. An electric power converter comprising:
an inverter having first and second upper and lower arms, in each of which two main switching elements are connected in series; the inverter converts DC voltage to AC voltage and supplies the AC voltage to a load,
a first inverter controller for controlling the inverter to operate as a half-bridge inverter by driving the switching elements of the first upper and lower arms, and
a second inverter controller for controlling the inverter to operate as a full-bridge inverter by driving the switching elements of the first and second upper and lower arms;
wherein the converter is provided with a chopper circuit for DC-to-DC converting DC supply voltage and applying the voltage as the DC voltage to the inverter;
the converter is provided with a first load circuit connected between output terminals of the half-bridge inverter comprising the first upper and lower arms,
a second load circuit including at least one part of the first load circuit, connected between output terminals of the full-bridge inverter comprising the first and second upper and lower arms, and
a switching means for contacting/separating the second load circuit to/from the inverter; and
one of the switching elements of the second upper and lower arms is also used as a boost or a buck boost switching element of the chopper circuit.

2. The electric power converter according to claim 1, wherein the first load circuit is connected between each of serial connection points of the first and second upper and lower arms.

3. The electric power converter according to claim 1 or 2, wherein the first and second load circuits are resonant load circuits each having an inductor and a resonant capacitor.

4. The electric power converter according to claim 3, wherein the resonant capacitor of the first load circuit has a smaller capacitance than the resonant capacitor of the second load circuit.

5. The electric power converter according to any one of claims 1 to 4, wherein the converter is provided with a smoothing capacitor for smoothing a DC power source and the DC voltage obtained from the DC power source through the chopper circuit, the first upper and lower arms are connected to the DC power source, and the second upper and lower arms are connected to the smoothing capacitor.

6. The electric power converter according to any one of claims 1 to 5, wherein the converter is provided with a driving means for driving the switching elements of the first and second upper and lower arms in synchronism.

7. The electric power converter according to any one of claims 1 to 6, wherein the converter is provided with a driving means for driving the switching elements of the first upper and lower arms at a higher frequency than the switching frequency of the second upper and lower arms.

8. The electric power converter according to any one of claims 1 to 7, wherein the converter is provided with a driving means for driving the switching elements of the inverter under the condition in which the second load circuit is cut off from the inverter, at higher frequency than the switching frequency of the inverter under the condition in which the second load circuit is connected to the inverter.

9. The electric power converter according to any one of claims 3 to 8, wherein the driving frequencies of the first and second upper and lower arms are approximately one over an integer of the resonance frequency of the first resonant load circuit.

10. The electric power converter according to any one of claims 1 to 9, wherein the converter is provided with a snubber capacitor connected in parallel to each of the switching elements of the first upper and lower arms.

11. A control method for an electric power converter comprising:
an inverter having first and second upper and lower arms, in each of which two main switching elements are connected in series; the inverter converts DC voltage to AC voltage and supplies the AC voltage to a load,
a first inverter controller for controlling the inverter to operate as a half-bridge inverter by driving the switching elements of the first upper and lower arms,
a second inverter controller for controlling the inverter to operate as a full-bridge inverter by driving the switching elements of the first and second upper and lower arms;
wherein a chopper circuit converts DC supply voltage to DC voltage which is applied to the inverter as the DC voltage;
a first load circuit is connected between output terminals of the half-bridge inverter comprising the first upper and lower arms;
a second load circuit including at least a part of the first load circuit is connected between output terminals of the full-bridge inverter comprising the first and second upper and lower arms;
the second load circuit is contacted/separated to/from the inverter by a switching means; and at the same time,
one switching element of the second upper and lower arms is also used as a boost or a buck boost switching element of the chopper circuit.

12. The control method for the electric power converter according to claim 11, wherein the first load circuit is connected between each of serial connection points of the first and second upper and lower arms.

13. The control method for the electric power converter according to claim 11 or 12, wherein resonant load circuits each having an inductor and a resonant capacitor, are connected as the first and second load circuits.

14. The control method for the electric power converter according to claim 13, wherein the resonant capacitor having a smaller capacitance than the resonant capacitor of the second load circuit is connected as the resonant capacitor of the first load circuit.

15. The control method for the electric power converter according to any one of claims 11 to 14, wherein the DC voltage obtained from a DC power source through the chopper circuit is smoothed by a smoothing capacitor, the first upper and lower arms are connected to the DC power source, and the second upper and lower arms are connected to the smoothing capacitor.

16. The control method for the electric power converter according to any one of claims 11 to 15, wherein the switching elements of the first and second upper and lower arms are driven in synchronism.

17. The control method for the electric power converter according to any one of claims 11 to 16, wherein the switching elements of the first upper and lower arms are driven at a higher frequency than the switching elements of the second upper and lower arms.

18. The control method for the electric power converter according to any one of claims 11 to 17, wherein the inverter under the condition in which the second load circuit is cut off from the inverter is driven at a higher frequency than the switching frequency of the inverter under the condition in which the second load circuit is connected to the inverter.

19. The control method for the electric power converter according to any one of claims 13 to 18, wherein the switching elements of the first and second upper and lower arms are driven at a switching frequency of approximately one over an integer of the resonance frequency of the first resonant load circuit.

20. The control method for the electric power converter according to any one of claims 11 to 19, wherein a snubber capacitor is connected in parallel to each of the switching elements of the first upper and lower arms.
